# EUROPEAN PATENT APPLICATION

(11) **EP 1 584 450 A1**
(43) Date of publication of application: **12.10.2005**
(21) Application number: 05102438.8
(22) Date of filing: 25.03.2005
(51) Int. Cl.: B29C 65/74, B29C 65/22

(54) **Method, device and profiled resistor mounting strip for the simultaneous sealing and cutting of plastic tapes**

(30) Priority: 02.04.2004 IT GE20040027
(71) Applicant: FIRIE DI GIORGIO SANSONE S.A.S., I-16129 Genova (IT)
(72) Inventor: Sansone, Giorgio, 16145 Genova (IT)
(74) Representative: Porsia, Dino

(57) **Abstract**

The invention relates to a method, a device and a profiled resistor mounting strip for producing, on a tape (1) composed of at least two superimposed layers (101, 201) of heat-sealable plastic intended in particular to form packaging for products placed between the two layers (101, 201), at least two transverse sealing lines (S) a certain distance apart and at least one transverse cutting line (T) between the two sealing lines (S). The invention is characterized in that the sealing lines (S) and the cutting line (T) are made simultaneously or almost simultaneously, by exerting pressure and/or applying heat by means of corresponding electrical heating resistors in the form of thin rods (6, 7, 8) that are compressed together with the tape (1) between two jaws and are preferably incorporated in a profiled resistor mounting strip (5) of electrically insulating material and of which that rod (7) which forms the resistor on the cutting line (T) generates more heat and/or exerts a greater specific pressure than each of the rods (6, 8) that form the resistors on the sealing lines (S).

## Description

The invention relates to methods and devices for producing, on a tape composed of at least two superimposed layers or sheets of heat-sealable plastic intended in particular to form packaging for products placed between the said two layers, at least two transverse sealing lines a certain distance apart and at least one transverse cutting line between the two sealing lines, particularly in order to close the bottom and top of two successive packagings and to separate these packagings from each other, according to the preamble of Claim 1.

Previously, the two seals were made by means of heated jaws which were moved towards and away from each other while the tape to be sealed and cut passed between them with an intermittent movement, cutting being done by a mechanical knife usually operated by a relatively complicated mechanism which was prone to failures and required continual maintenance, or by an incandescent or hot electrical resistor working like a knife and with the same drawbacks.

The object of the invention is to eliminate the drawbacks of previously known methods of the type indicated above and for this purpose provides a method according to the preamble of Claim 1, characterized in that the sealing lines and the cutting line are made simultaneously or almost simultaneously, by exerting pressure and applying heat by means of corresponding electrical heating resistors consisting of thin rods or the like, of which that rod which forms the resistor on the cutting line generates more heat and/or exerts a greater specific pressure than each of the rods that form the sealing resistors.

In order to carry out the above method the invention provides a device comprising a sealing jaw and an opposing jaw, it being possible to move these jaws towards and away from each other in such a way as to compress between themselves the tape which is made up of at least two superimposed layers of heat-sealable plastic and passed between the said jaws with an intermittent movement of advance synchronized with that of the jaws, according to the preamble of Claim 4. According to the invention, in this device the rods forming both the cutting and sealing electrical heating resistors are attached in an electrically insulated manner to that side of the sealing jaw which is nearest the opposing jaw and the rod forming the cutting resistor projects further towards the opposing jaw than the rods forming the sealing resistors and/or its profile is of a shape and of dimensions such as to exert on the interposed tape a specific pressure greater than that exerted by the sealing resistor rods and/or is supplied - relative to the dimension of its cross section - with an electric current sufficient for it to heat up more than the rods forming the sealing resistor.

In a preferred and especially advantageous embodiment of the invention, the cutting and sealing electrical resistor rods are incorporated in a resistor mounting strip which is made of an electrically insulating material resistant to the heat developed by the said electrical resistors and can be applied and preferably bonded removably and replaceably to the sealing jaw. This resistor mounting strip preferably consists of a glass fabric impregnated with PTFE or TFE or the like, and its surface facing and in contact with the sealing jaw is preferably planar and can be - depending on how the resistor mounting strip is attached to the sealing jaw - non-stick or able to be bonded to this sealing jaw, while that surface of the resistor mounting strip which faces the opposing jaw is profiled and includes ridges in locations corresponding to the rods. The rods are preferably housed in such a way that they can slide in their longitudinal direction along corresponding channels in the resistor mounting strip in order to allow the thermal expansions and contractions of the rods and prevent the consequent wrinkles appearing in the resistor mounting strip.

The above profiled resistor mounting strip can be used with advantage in any device or machine of the above type and is therefore an independent subject of the invention, protected separately and independently of the specific manner in which it is applied.

These and other features of the invention and the advantages which derive therefrom will become clearer in the course of the following description of a preferred embodiment, illustrated diagrammatically by way of non-limiting example in the accompanying drawings, in which:
Fig. 1 shows in section and on an enlarged scale a sealing and cutting device provided with a profiled resistor mounting strip according to the invention;
Fig. 2 shows an approximately life-size plan view of the profiled resistor mounting strip only, according to Figure 1; and
Fig. 3 shows the sliding arrangement of a rod belonging to the profiled resistor mounting strip according to Figs 1 and 2.
Fig. 4 shows in section and on an enlarged scale a further embodiment of the profiled resistor mounting strip according to the invention.

Referring to the drawing, the illustrative embodiment shown relates to a packaging device in which at least two superimposed long layers or sheets 101, 201 made of heat-sealable plastic contain a succession of spaced-out product (not shown) which are to be packaged. Between every two successive products, two transverse sealing lines S are made a certain distance apart and approximately parallel in the tape 1 composed of the two superimposed layers 101, 201. Of these lines, one closes the bottom and the other the top of two successive packagings, while a transverse cutting line T is made between the two sealing lines S and separates the two successive packagings from each other.

For this purpose the device comprises two interacting jaws, one termed the sealing jaw 3 and the other the opposing jaw 4, between which the tape 1 is passed with an intermittent forward movement, for example in the direction of the arrow 2, for welding and cutting. The jaws 3, 4 can move towards and away from each other, either one or both being moved by any suitable operating mechanism, and they close in the stopping intervals of the tape 1, compressing this tape 1 between themselves and then opening again to allow the tape together with the products to advance in the direction of the arrow 2 in a step corresponding to the length of one packaging.

On that surface of the sealing jaw 3 which faces the opposing jaw 4 there is fixed a resistor mounting strip 5 made of an electrically insulating material resistant to heat given off by the device when operating. In a preferred embodiment the resistor mounting strip 5 is made of glass fabric impregnated with PTFE or TFE or the like.

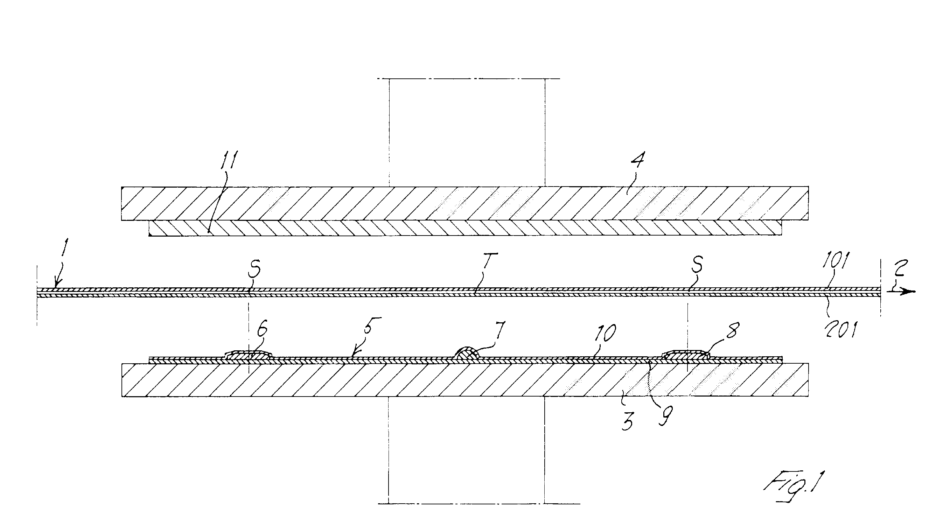

Incorporated into the resistor mounting strip 5 are three electrical heating resistors 6, 7, 8 in the form of thin rods or the like, made of some suitable alloy. The rods 6, 7, 8 extend in the longitudinal direction of the resistor mounting strip 5 and the latter is fixed to the sealing jaw 3 in a direction such that the rods 6, 7, 8 extend transversely to the longitudinal direction of advance 2 of the tape 1. The distance between the rods 6, 7, 8 is equal to the distance of the sealing lines S from each other and from the cutting line T, and the rods 6, 7, 8 are laid along these lines S, T, as is clear in Fig. 1.

The two rods 6 and 8 situated on the sealing lines S take the form of strips and have an essentially rectangular profile, of which the surface facing the sealing jaw 3 is flat, while its opposite surface, facing the opposing jaw 4, may also be flat or may be slightly convex or have rounded corners. The rod 7 located on the cutting line T, on the other hand, has a profile whose surface facing the sealing jaw 3 is also flat, but whose opposite surface facing the opposing jaw 4 is more convex than the rods 6, 8. Specifically, the profile of the rod 7 lying along the cutting line is semicircular or pointed, e.g. triangular, its vertex being preferably rounded. The rod 7 lying along the cutting line may also have a circular or similar profile and/or be narrower than the rods 6, 8 lying along the sealing lines S. The rod 7 lying along the cutting line T also has a thickness (measured at right angles to the surface of the sealing jaw 3) at least a little greater than the corresponding thickness of the rods 6, 8 situated along the sealing lines S.

The rods 6, 7, 8 are housed in corresponding channels in the resistor mounting strip 5 and their flat surfaces facing the sealing jaw 3 are essentially coplanar and covered by a flat layer 9 of material, while on its opposite side, facing the opposing jaw 4, the rods 6, 7, 8 are covered by a layer of material 10 preferably thinner than the layer 9 and form corresponding ridges in the resistor mounting strip 5, in other words giving the strip 5 a corresponding profile. In the illustrative embodiment shown, because of the greater height of the rod 7, the ridge formed on the resistor mounting strip 5 by the rod 7 along the cutting line T therefore projects further towards the opposing jaw 4 than the ridges formed on the resistor mounting strip 5 by the rods 6, 8 along the sealing lines S.

The layer of material 9 facing and in contact with the sealing jaw 3 is preferably also heat-insulating to prevent or reduce the transmission to the sealing jaw 3 of the heat generated by the heating resistor rods 6, 7, 8.

The opposing jaw 4 has an elastically compliant and heat-resistant layer or cushion 11 on its surface facing the sealing jaw 3 and therefore facing the resistor mounting strip 5.

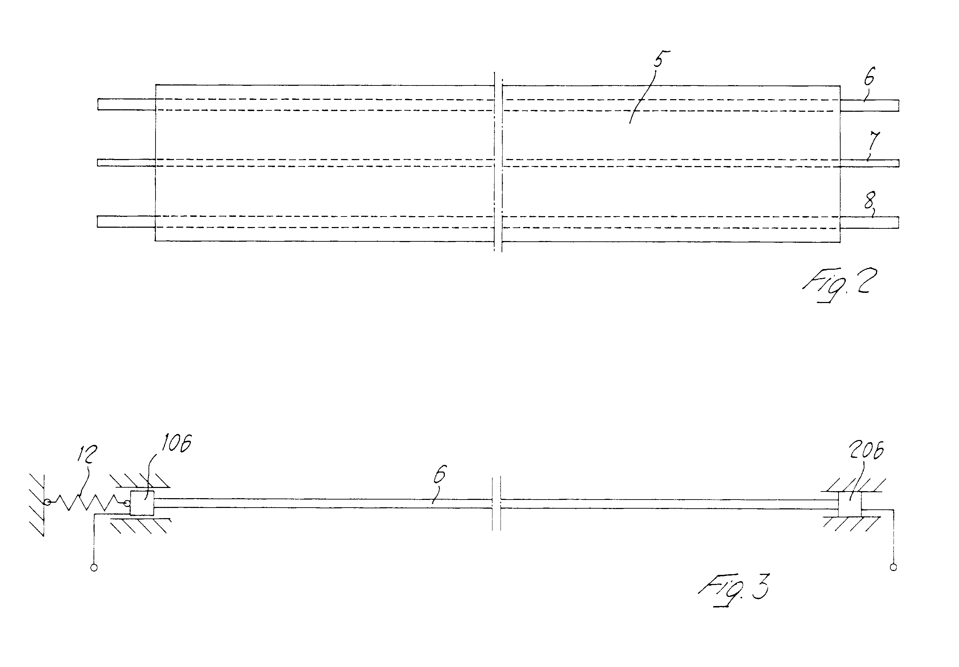

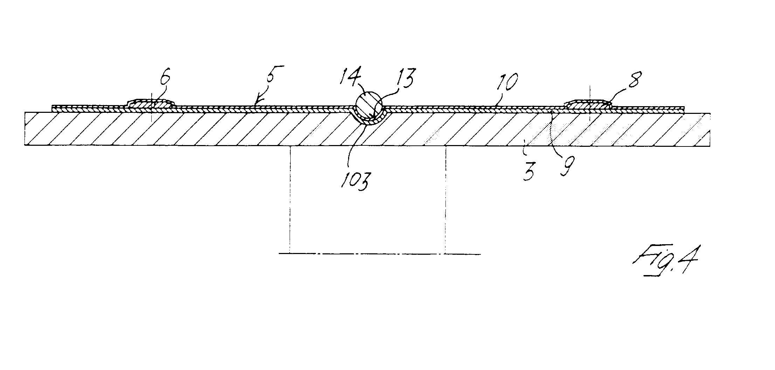

The electrical heating resistor rods 6, 7, 8 form part of an electric circuit (not shown), by means of which they can be connected to any electrical power supply. For this purpose each rod 6, 7, 8 may be provided at each end with suitable connection clamps, as illustrated in Fig. 3 in the case of the rod 6, the ends of which are marked 106 and 206. Each rod 6, 7, 8 is housed in such a way that it can slide in its longitudinal direction in its channel in the resistor mounting strip 5. One end of each rod 6, 7, 8, such as the end 206 of the rod 6 shown in Fig. 3, is held in a fixed position, while the other end, such as the end 106 of the rod 6, is guided and able to slide in the longitudinal direction of its rod and is pulled in this direction by a tension spring 12 depicted diagrammatically in Fig. 3.

When the jaws 3, 4 close on the interposed tape 1 and compress it between themselves together with the profiled resistor mounting strip 5, an electric current is passed into the electrical heating resistor rods 6, 7, 8, either continuously or in pulses, and heats up the rods 6, 7, 8. The current sent through the two rods 6, 8 lying along the two sealing lines S is such that, in combination with the broad, flat profile of the said rods 6, 8, these latter rods seal together the layers 101, 201 of the tape 1. Simultaneously or almost simultaneously the electrical heating resistor rod 7 cuts the tape 1 along the cutting line T. This cut is brought about by the greater height of the corresponding rod 7 on the surface of the sealing jaw 3 and/or by its special profile, which may be narrower and/or more convex or pointed than the sealing rods 6, 8, so that the cutting rod 7 exerts on the tape 1 a greater specific pressure than that exerted by the two sealing rods 6, 8. The electric current passed through the electrical heating resistors formed by the sealing rods 6, 8 and by the cutting rod 7 may be of the same value or of different values so that all the rods 6, 7, 8 are heated uniformly, the tape 1 being cut simply by the action of the greater mechanical specific pressure exerted by the rod 7. As matter of preference, however, in combination with the said geometrical features of the cutting rod 7 and of the mechanical action of a resulting greater specific pressure or alternatively of at least one of the said geometrical features or of at least a fraction of at least one of them (as it might be, in combination with a broader and/or less projecting and/or less convex or less pointed profile of the cutting rod 7), the electrical heating resistor rod 7 may carry a current such as to heat up the cutting rod 7 more than the sealing rods 6, 8. If this approach is adopted, the tape 1 will be cut by the combined action of greater mechanical specific pressure and higher temperature.

Additionally, in particular cases it may be unnecessary to heat the rod 7 extending along the cutting line T, in other words this rod 7 may be left cold, i.e. it may carry no electric current, and the tape 1 may be cut, in combination with an appropriate shape and/or dimension of the profile of the rod 7, simply by the action of the mechanical pressure exerted by this rod 7 when the jaws 3, 4 are closed.

Similarly, in certain cases the layers 101, 201 of the tape 1 may be sealed along the sealing lines S simply by the action of the mechanical pressure exerted by the corresponding rods 6, 8 left cold, that is without electrical current being supplied to them.

The sealing of the layers 101, 201 of the tape 1 along the sealing lines S may moreover be brought about simply by the action of the heat given off by the heating resistors formed by the corresponding rods 6, 8 exerting no appreciable mechanical pressure on the tape 1, or only minimal pressure; in other words they are simply heating resistors.

It will be obvious that the main advantage achieved with the profiled resistor mounting strip 5 described above in accordance with the invention is that it carries out the sealing and cutting operations on the tape 1 simultaneously or almost simultaneously, in a single operation and using simple, inexpensive means that may be easily and conveniently applied and replaced, thus eliminating the mechanical knives and equivalent thermal cutting means and their drawbacks.

The invention is not of course limited to the illustrative example described above and depicted nor to the corresponding particular application of the profiled resistor mounting strip, but can be considerably altered and modified, especially from the point of view of construction within the scope of constructional and functional equivalences. In particular, the profiled resistor mounting strip according to the invention may be used with advantage in any device or machine for sealing and cutting plastic tapes and can be considerably modified and adapted to the exigencies of the case, in particular as regards the geometrical shape and/or dimensions of the profile of the incorporated rods forming the electrical heating resistors. Instead of thin rods or bars, the said electrical resistors may take the form of any equivalent elements, such as corresponding extrusions or wires. Each sealing line S and also the cutting line T can be single (as illustrated) or multiple, meaning that they may each comprise two or more sealing lines S or cutting lines T, in which case the resistor mounting strip 5 will be incorporated in a corresponding number of electrical sealing and/or heating only and/or cutting resistors or at least there will be a corresponding number of channels for housing an electrical sealing and/or cutting resistor in a predetermined position. The cutting and sealing electrical resistor rods 6, 7, 8 may have the same ohmic resistance or different ohmic resistances, or may be made of materials or alloys with different resistivities. The electric currents sent through the rods 6, 7, 8 may be equal or different. Instead of three rods 6, 7, 8 on the sealing jaw 3 of the device according to the invention and/or in the resistor mounting strip 5 according to the invention, any number of rods may be used, in particular just two rods, for example one for cutting and the other for sealing, or just two sealing rods.

In the embodiment shown in Figure 4, on the surface of the sealing jaw 3 there is fixed a resistor mounting strip 5 made of electrically insulating material, in which the two rods 6 and 8 situated on the sealing lines are housed (as described with reference to the embodiment of Figure 1) in corresponding channels in the said resistor mounting strip 5 between the layers 9 and 10. The resistor mounting strip 5 presents, at the cutting line, a longitudinal groove or cavity 13 with its concavity directed towards the opposing jaw and which is housed in a corresponding longitudinal groove or cavity 103 obtained in the sealing jaw 3. In the said groove 13 there is accommodated the cutting rod 14 which projects out of the said groove 13 in such a manner and to an extent such as to ensure a correct cutting action. The said cutting rod 14 may be coated, if desired or required, with any suitable insulating material.

## Claims

1. Method for producing, on a tape (1) composed of at least two superimposed layers (101, 201) of heat-sealable plastic intended in particular to form packaging for products placed between the two layers (101, 201), at least one and preferably two transverse sealing lines (S) a certain distance apart and at least one transverse cutting line (T) between the two sealing lines (S) to close the bottom and top of two successive packagings and to separate these packagings from each other, which method is **characterized in that** the sealing lines (S) and the cutting line (T) are made simultaneously or almost simultaneously, by exerting pressure and/or applying heat by means of corresponding electrical heating resistors in the form of thin rods (6, 7, 8) or the like, of which that rod (7) which forms the resistor on the cutting line (T) generates more heat and/or exerts a greater specific pressure than each of the rods (6, 8) that form the resistor or resistors on the sealing lines (S).

2. Method according to Claim 1, **characterized in that** the cut is made without heating the rod (7) located on the cutting line (T), that is without sending electric current through this rod.

3. Method according to Claim 1 or 2, **characterized in that** the sealing is done without heating the rods (6, 8) located on the sealing lines (S), that is without sending electrical current through these rods.

4. Device for carrying out the method according to one or more Claims 1 to 3, comprising a sealing jaw (3) and an opposing jaw (4), it being possible to move these jaws towards and away from each other in such a way as to compress between themselves the heat-sealable plastic tape (1) which is passed between the said jaws (3, 4) with an intermittent movement of advance (2) synchronized with that of the jaws (3, 4), which device is **characterized in that** the rods (6, 7, 8) forming the electrical heating resistors on the cutting (T) and sealing (S) lines are attached in an electrically insulated manner to that side of the sealing jaw (3) which is nearest the opposing jaw (4) and the rod (7) forming the cutting resistor projects at least a little further towards the opposing jaw (4) than the rods (6, 8) corresponding to the sealing resistors and/or its profile is of a shape and/or of dimensions such as to exert on the interposed tape (1) a specific pressure greater than that exerted by the sealing resistor rods (6, 8) and/or is supplied - relative to the dimension of its cross section - with an electric current sufficient for it to heat up more than the sealing rods (6, 8).

5. Device according to Claim 4, **characterized in that** the profile of the cutting resistor rods (7) presents to the opposing jaw (4) a convex part that is in particular arcuate or pointed and/or narrower than the essentially flat side presented to the opposing jaw (4) by the sealing resistor rods (6, 8).

6. Device according to Claim 5, **characterized in that** the cutting resistor rod (7) has an essentially circular or semicircular or other similar profile, with its convex arcuate side turned towards the opposing jaw (4).

7. Device according to one or more of Claims 4 to 6, **characterized in that** the sealing resistor rods (6, 8) are strips and have an essentially rectangular profile, of which the side facing the opposing jaw may optionally be slightly arched and/or may have rounded corners.

8. Device according to one or more of Claims 4 to 7, **characterized in that** the profile of the sealing and cutting electrical resistor rods (6, 7, 8) presents a flat side to the sealing jaw (3) and these flat sides of the rods (6, 7, 8) are essentially coplanar with each other.

9. Device according to one or more of Claims 4 to 8, **characterized in that** the opposing jaw (4) has an elastically compliant and heat-resistant layer (11) on the side facing the sealing jaw (3).

10. Device according to one or more of Claims 4 to 9, **characterized in that** the sealing and cutting resistor rods (6, 7, 8) are fixed removably and replaceably to the sealing jaw (3).

11. Device according to one or more of Claims 4 to 10, **characterized in that** the sealing and cutting electrical resistor rods (6, 7, 8) are incorporated in a resistor mounting strip (5) which is made of an electrically insulating material resistant to the heat developed by the said electrical resistors, which resistor mounting strip (5) can be applied preferably removably and replaceably to the sealing jaw (3).

12. Device according to Claim 11, **characterized in that** the surface of the resistor mounting strip (5) which faces the opposing jaw (4) is profiled and includes ridges in locations corresponding to the incorporated rods (6, 7, 8).

13. Device according to Claim 11 or 12, **characterized in that** the layer (10) that covers the rods (6, 7, 8) incorporated in the resistor mounting strip (5) on the side facing the opposing jaw (4) is thinner than the layer (9) that covers the said rods on the side facing the sealing jaw (3).

14. Device according to one or more of Claims 4 to 13, **characterized in that that** layer of the resistor mounting strip (5) which covers the incorporated rods (6, 7, 8) on the side facing the sealing jaw (3) has better heat-insulating properties than those of that layer (10) which covers the said rods (6, 7, 8) on the side facing the opposing jaw (4).

15. Device according to one or more of Claims 11 to 14, **characterized in that** the resistor mounting strip (5) is made of a glass fabric impregnated with PTFE or TFE or the like.

16. Device according to one or more of Claims 11 to 15, **characterized in that that** surface of the resistor mounting strip (5) which faces the sealing jaw (3) can be bonded to the said sealing jaw (3) and the resistor mounting strip (5) is bonded removably and replaceably to the sealing jaw (3).

17. Device according to one or more of Claims 11 to 14, **characterized in that that** surface of the resistor mounting strip (5) which faces the sealing jaw (3) is non-stick and the resistor mounting strip (5) is fixed to the sealing jaw (3) in any removable manner other than bonding.

18. Device according to one or more of Claims 11 to 17, **characterized in that that** surface of the resistor mounting strip (5) which faces and attaches to the sealing jaw (3) is essentially planar.

19. Device according to one or more of Claims 11 to 18, **characterized in that** the electrical heating resistor rods (6, 7, 8) are housed in such a way that they can slide in their longitudinal direction along corresponding channels formed in the resistor mounting strip (5).

20. Device according to one or more of Claims 4 to 19, **characterized in that** the material of the rod (7) lying along the cutting line (T) has a different ohmic resistance to the ohmic resistance of the material of the rods (6, 8) lying along the sealing lines (S).

21. Device for carrying out the method according to one or more Claims 1 to 3, comprising a sealing jaw (3) and an opposing jaw (4), it being possible to move these jaws towards and away from each other in such a way as to compress between themselves the heat-sealable plastic tape (1) which is passed between the said jaws (3, 4) with an intermittent movement of advance (2) synchronized with that of the jaws (3, 4), which device is **characterized in that** the rods (6, 7) forming the electrical heating resistors on the sealing lines (S) are attached in an electrically insulated manner to that side of the sealing jaw (3) which is nearest the opposing jaw (4), and the rod (14) forming the cutting resistor on the cutting line (T) is partially accommodated in a groove (103, 13) formed on the side of the sealing jaw (3) which is nearest the opposing jaw (4), the said rod (14) forming the cutting resistor projecting at least a little further towards the opposing jaw (4) than the rods (6, 8) corresponding to the sealing resistors and/or its profile being of a shape and/or of dimensions such as to exert on the interposed tape (1) a specific pressure greater than that exerted by the sealing resistor rods (6, 8) and/or being supplied - relative to the dimension of its cross section - with an electric current sufficient for it to heat up more than the sealing rods (6, 8).

22. Resistor mounting strip made of an electrically insulating material resistant to the operating heat, designed in particular for carrying out the method according to one or more of Claims 1 to 3 and/or to be used in devices according to one or more of Claims 4 to 21, for sealing and cutting tapes of heat-sealable plastic, which resistor mounting strip is **characterized in that** it incorporates at least two and preferably three thin rods (6, 7, 8) a certain distance apart and essentially parallel and extending in the longitudinal direction of the resistor mounting strip (5), all or some of which form electrical heating resistors which form corresponding ridges on that side of the resistor mounting strip (5) which is intended to come into contact with the tape (1) that is to be sealed and cut, giving a corresponding profile to the said side of the resistor mounting strip (5), one rod and preferably the middle rod (7) being capable of exerting a greater specific pressure and/or developing more heat than the two side rods (6, 8), and the said rods (6, 7, 8) being housed in such a way that they can be slid in their longitudinal direction in corresponding channels in the resistor mounting strip (5), which resistor mounting strip (5) can be fixed and in particular bonded removably and replaceably to a sealing jaw (3).

23. Resistor mounting strip made of an electrically insulating material resistant to the operating heat, designed in particular for carrying out the method according to one or more of Claims 1 to 3 and/or to be used in the device according to Claim 21, for sealing and cutting tapes of heat-sealable plastic, which resistor mounting strip is **characterized in that** it incorporates sealing rods (6, 8) a certain distance apart and essentially parallel and extending in the longitudinal direction of the resistor mounting strip (5), which form electrical heating resistors forming corresponding ridges on that side of the resistor mounting strip (5) which is intended to come into contact with the tape (1) that is to be sealed and cut, said resistor mounting strip (5) presenting further one groove (13) for partially accommodating, parallel to the said sealing rods, a cutting rod (14) being capable of exerting a greater specific pressure and/or developing more heat than the sealing rods (6, 8), and the said sealing rods (6, 8) being housed in such a way that they can be slid in their longitudinal direction in corresponding channels in the resistor mounting strip (5), which resistor mounting strip (5) can be fixed and in particular bonded removably and replaceably to a sealing jaw (3).

24. Profiled resistor mounting strip according to Claim 21, **characterized in that** it has one or more of the features according to Claims 1 to 21.
